# EUROPEAN PATENT APPLICATION

(11) **EP 1 669 788 A1**
(43) Date of publication of application: **14.06.2006**
(21) Application number: 04772777.1
(22) Date of filing: 03.09.2004
(51) Int. Cl.: G02B 7/36

(54) **PHOTOGRAPHING LENS POSITION CONTROL DEVICE**

(30) Priority: 22.09.2003 JP 2003329457
(71) Applicant: SHARP KABUSHIKI KAISHA, Osaka 545-8522 (JP)
(72) Inventor: TAKEDA, Mitsuhiko, Chiba-shi, Chiba 266-0031 (JP); HAYASHI, Hiroyuki, Chiba-shi, Chiba 262-0021 (JP)
(74) Representative: Müller, Frithjof E.
(86) International application number: PCT/JP2004/012828
(87) International publication number: WO 2005/033764

(57) **Abstract**

In conventional contrast detection method, a photographing lens position is determined by scanning an image in one frame of each lens position at each lens position to capture an image signal and calculating a focus judging value. Therefore, a considerable time is required for determining a focus lens position at which a subject is focused. A photographing lens position control device comprising an image signal capturing unit for capturing an image signal, a focus lens moving unit for moving a focus lens while the image signal capturing unit is capturing an image signal, a retaining unit for retaining a position-dependent image signal, and a photographing lens position determining unit for determining a photographing lens position based on a position-dependent image signal. Since a focus lens is moved while an image signal is being captured as mentioned above, time required for capturing an image signal for determining a photographing lens position is shorter than before.

## Description

### BACKGROUND OF THE INVENTION

### Field of the Invention

The present invention relates to determining and controlling a focus lens position of a camera.

### Description of the Related Art

Conventionally, as for a function of automatically focusing on a subject in photographing by a camera, a so-called autofocus function of a camera, various technologies have been disclosed. A contrast detection system is one of the technologies, wherein 'high-contrast state' is regarded as 'in-focus state'. A concrete example of this method includes a method disclosed in Japanese Patent No. 2523011. In the prior art, a focus lens position is moved with respect to each frame (or each field), and contrast data, as a determination value of in-focus for respective positions, is acquired.

However, as described above, in the prior art, only the determination value of in-focus for respective positions is acquired with respect to each frame. Therefore, a determination value of in-focus in a certain lens position is acquired by scanning an image of one frame in the lens position, and by acquiring an image signal, which is a basis for contrast data, and the above processing is performed in the respective lens positions, thus, processing to determine a focus lens position of in-focus on a subject requires time. Consequently, it is possible that, in the case of using a digital camera adopting this contrast detection method, a chance for shooting is missed.

### SUMMARY OF THE INVENTION

In order to solve the above deficiency, the present invention provides a device for controlling an imaging lens position, comprising, an image signal acquirer, which acquires an image signal, a focus lens moving unit, which moves a focus lens during an acquisition time period, in which said image signal acquirer acquires the image signal, a storage, which stores a position-dependent image signal, which is information correlating the image signal acquired by said image signal acquirer with a focus lens position, which is moved by said focus lens moving unit, and a determinator for an imaging lens position, which determines an imaging lens position, which is a focus lens position for imaging, based on the position-dependent image signal stored by said storage. Note that the 'focus lens' corresponds to a lens in a camera moving for focusing on a subject. Moreover, 'focus lens position' corresponds to a position of the focus lens in an imaging system of a photographic device.

According to the present invention having the above constitution, a focus lens is moved during acquisition of an image signal, thereby reducing the acquisition time of an image signal for determining an imaging lens position in comparison to a conventional method. Hence, it becomes possible to properly take advantage of a chance of shooting.

Note that a camera of the preset invention includes not only a camera for imaging a still picture but also general photographic devices which perform focusing using a lens such as a video camera for movie shooting.

### BRIEF DESCRIPTION OF THE DRAWINGS

Fig. 1 is a functional block diagram of a device for controlling an imaging lens position in the first embodiment;
Fig. 2 is a diagram showing a relationship between an image signal acquirer and a focus lens moving unit of a device for controlling an imaging lens position in the first embodiment;
Fig. 3 is a diagram showing a relationship between said image signal acquirer when moving intermittently and a focus lens moving unit of a device for controlling an imaging lens position in the first embodiment;
Fig. 4 is a diagram showing a determination of an imaging lens position in the determinator for an imaging lens position of a device for controlling an imaging lens position in the first embodiment;
Fig. 5 is a diagram of a constitutional example of when a device for controlling an imaging lens position in the first embodiment is mounted on a camera;
Fig. 6 is a diagram expressing an acquisition of contrast data necessary for determining an imaging lens position in the constitutional example of the first embodiment;
Fig. 7 a diagram showing CMYG signal, which is an image signal acquired by an acquirer for an image signal of a device for controlling an imaging lens position in the first embodiment;
Fig. 8 is a flowchart exemplifying a processing flow of a device for controlling an imaging lens position in the first embodiment;
Fig. 9 is a diagram showing a scan method of a device for controlling an imaging lens position in the second embodiment;
Fig. 10 is a diagram showing a scan method of a device for controlling an imaging lens position in the second embodiment; and
Fig. 11 is a diagram showing another scan method of a device for controlling an imaging lens position in the second embodiment.

### DETAILED DESCRIPTION OF THE PREFERRED EMBODIMENTS

Embodiments of the present invention will be described hereinafter with reference to the drawings. Note that the present invention is not to be limited to the above embodiments and may be embodied in various forms without departing from the scope thereof.

Note that the first embodiment will mainly describe Claims 1, 2, 3, 4, 8, 9, and 10. Moreover, the second embodiment will mainly describe Claims 5, 6, and 7.

### (First embodiment)

In the first embodiment, a device for controlling an imaging lens position, which determines a focus lens position by moving a focus lens during an acquisition time period of an image signal, will be described. Hereinafter, a constitution of this device for controlling an imaging lens position will be described.

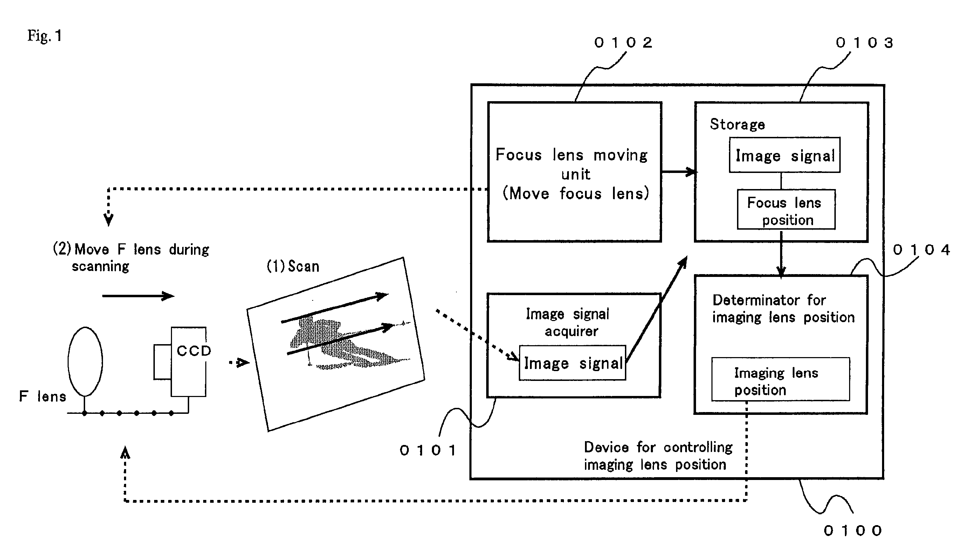

Fig. 1 is a functional block diagram of a device for controlling an imaging lens position in the first embodiment. As described in Fig. 1, the 'device for controlling an imaging lens position' (0100) in the first embodiment comprises, 'image signal acquirer' (0101), 'focus lens moving unit' (0102), 'storage' (0103), and `determinator for an imaging lens position' (0104). First of all, in accordance with the above constitution, the constitutional requirements of the device for controlling an imaging lens position in the first embodiment will be described.

The 'image signal acquirer' (0101) has a function of acquiring an image signal. The 'image signal' corresponds to a signal indicating color or luminance etc. generated by a device of a camera such as a CCD, a CMOS imager, or a color filter converting intensity of light etc. to an electronic signal. Examples of the image signal include: a YUV signal indicating a color using a luminance signal (Y), a difference between the luminance signal and a component of red (U), and a difference between the luminance signal and a component of blue (V); an RGB signal expressing color by a combination of three primary colors, red (R), green (G), and blue (B); and a CMYG signal indicating Cyan, Magenta, Yellow, and Green, which are complementary colors.

This acquisition is performed by the image signal acquirer, wherein, for example, an image signal such as a luminance signal (Y), to which intensity of light in respective picture elements of a subject acquired by a photodiode are converted, is acquired by utilizing a device such as a CCD or a CMOS imager etc. as described above.

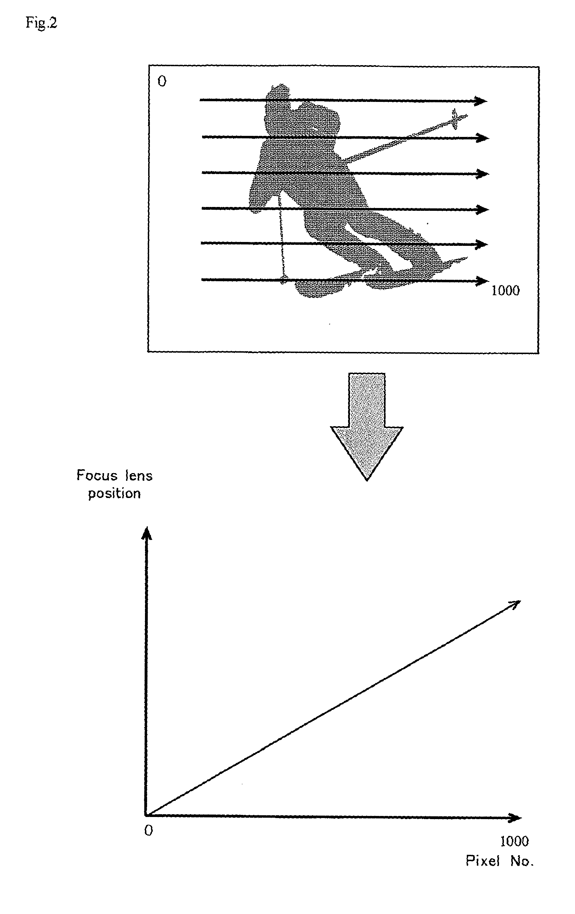

The 'focus lens moving unit' (0102) has a function of moving a focus lens during an acquisition time period. The 'acquisition time period' is a time period such as a time period for acquiring an image signal of a frame, in which said image signal acquirer acquires the image signal. Fig. 2 is a diagram showing the relationship between an image signal acquirer and a focus lens moving unit. As shown in Fig. 2, a scan of an image acquired by a CCD or a CMOS imager is performed in the direction indicated by the arrow, and an image signal of respective picture elements (in Fig. 2, indicated as picture element 0 to 1000) is acquired by an image signal acquirer. Here, as shown in the graph of Fig. 2, the focus lens position is moved (indicated on the horizontal axis) by the focus lens moving unit (indicated on the vertical axis), so that the image signals of the picture element 0 to 1000 are acquired.

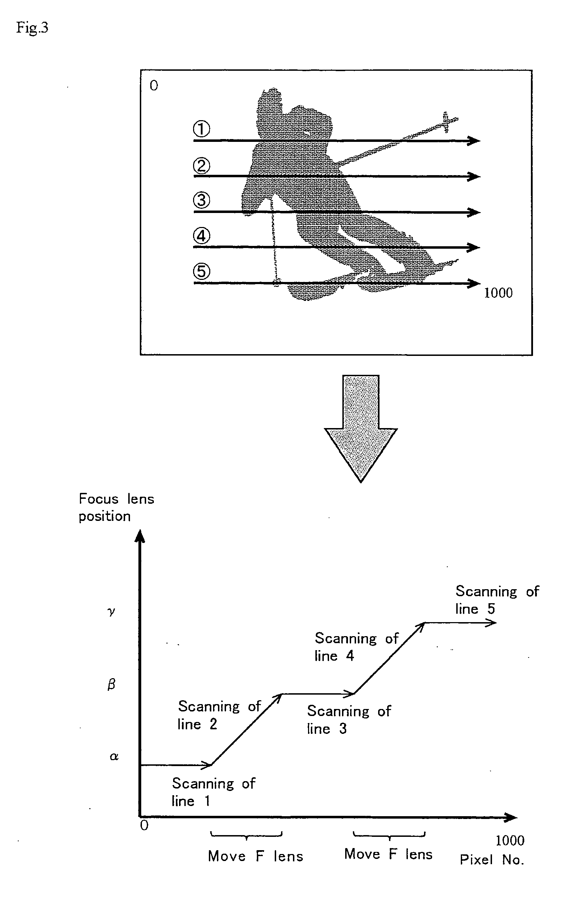

Alternatively, upon this acquisition of the image signal, the focus lens may move intermittently, and the image signal may be acquired during a non-moving state of said focus lens moving intermittently. The 'moving intermittently' means that a moving state and a non-moving state are alternately repeated at a predetermined interval. Fig. 3 is a diagram showing the relationship between the above-mentioned image signal acquirer when moving intermittently and a focus lens moving unit. As shown in Fig. 3, first of all, in the focus lens position a, a scan of the portion indicated by arrow (1) is performed, and an image signal is acquired. After that, the focus lens is moved, and a scan of the portion indicated by arrow (2) is performed during the movement. Subsequently, in the focus lens position β as a destination of the movement, a scan of the portion indicated by arrow (3) is performed, and an image signal is acquired. Similarly, the focus lens is moved to the position y, and a scan of the portion indicated by arrow (4) is performed during the movement. After that, a scan of the portion indicated by arrow (5) is performed, and an image signal is acquired.

Moreover, this acquisition of the position-dependent image signal by intermittently moving may mean that the number of processes for acquiring the position-dependent image signal is more than N frames. Therefore, three position-dependent image signals may be acquired within two frames.

Thus, conventionally, by scanning one entire frame, an image signal is acquired, whereas, in the first embodiment, by moving or intermittently moving a focus lens in one frame, an image signal is acquired, thereby reducing the processing time of acquiring an image signal.

Note that, this focus lens moving unit may be an internal moving device in a body built into a camera body, or may be a moving device in a lens built into an interchangeable lens. Moreover, the moving device may be implemented, for example, by a direct-current motor having a simple driving circuit, or a ultrasonic motor, which converts oscillation to torque, and a control circuit such as a microprocessor, which controls the torque of the motor.

The 'storage' (0103) has a function of storing a position-dependent image signal. The 'position-dependent image signal' corresponds to information correlating the image signal acquired by the image signal acquirer (0101) with a focus lens position, which is moved by said focus lens moving unit (0102). As described above, an image signal is a signal indicated by luminance signal (Y), RGB signal, or CMYG signal etc. The focus lens position is information indicated by a value such as pulse number, number of revolutions, or actual moving distance of a lens. This storage correlates and stores the above information as a position-dependent image signal. Note that, this storage may be implemented by a storage medium such as a memory.

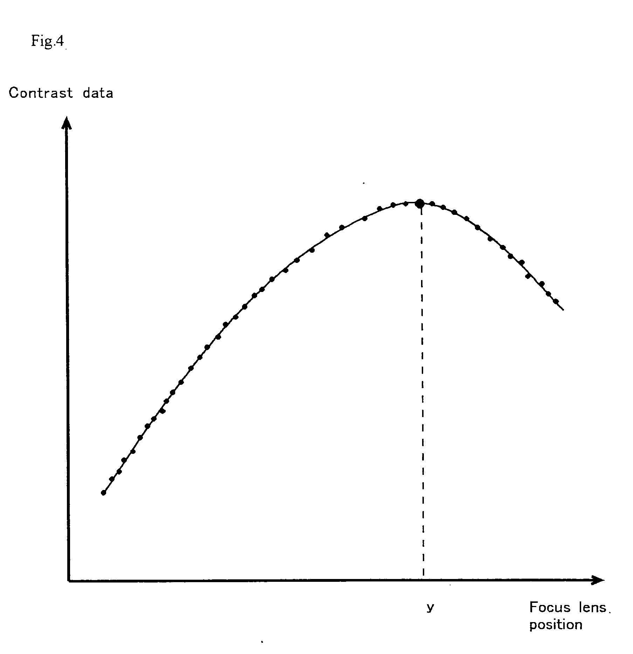

The 'determinator for an imaging lens position' (0104) has a function of determining an imaging lens position, which is a focus lens position for imaging, based on the position-dependent image signal stored by the storage (0103). Fig. 4 is a diagram showing a determination of an imaging lens position in the determinator for an imaging lens position. Firstly, based on the image signal acquired by the above-mentioned respective components, contrast data (determination value of in-focus) is computed. After that, as shown in Fig. 4, the computed contrast data is plotted with respect to each lens position. Then, it assumes a peak in the focus lens position y (e.g. the slope of plotted contrast data turns from positive to negative), so that the peak of focus lens position y (at the peak) is determined as an imaging lens position in which the contrast becomes strongest, therefore, in-focus. Of course this is an example, and in case of multiple peaks, a focus lens position having the maximum peak or a focus lens position in the foreground (a subject in the foreground is focused) may be determined to be a focus lens position. Note that, a method for acquiring contrast data from an image signal will be described in the following embodiment in which a device for controlling an imaging lens position is mounted on a camera.

Hereinabove, the constitutional requirements of the device for controlling an imaging lens position of the first embodiment has been described. Subsequently, an acquisition of contrast data will be described by showing a concrete constitutional example of a device for controlling an imaging lens position of the first embodiment when it is mounted on a camera.

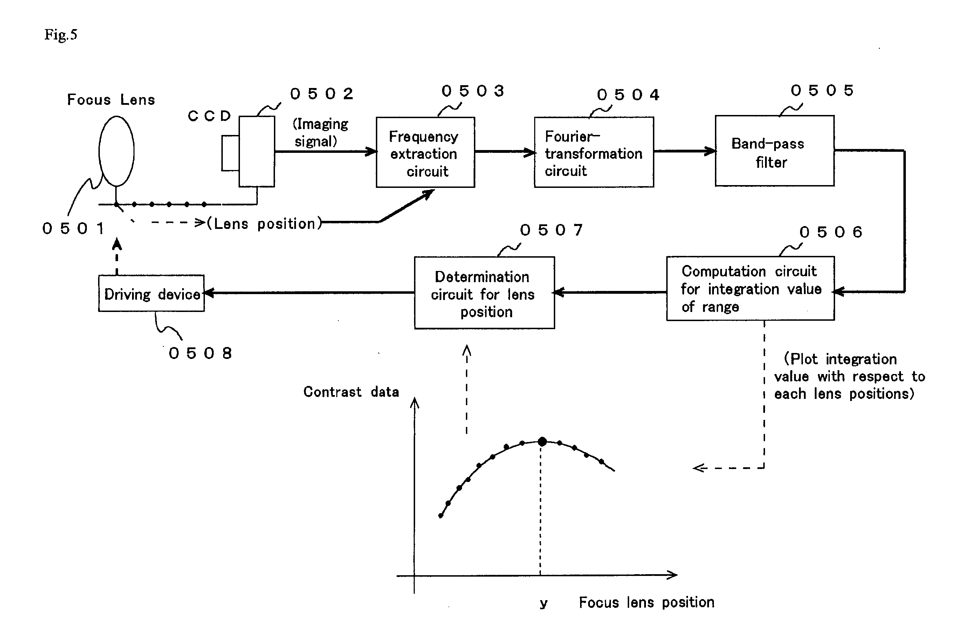

Fig. 5 is a diagram of a constitutional example of when a device for controlling an imaging lens position in the first embodiment is mounted on a camera. Note that, in the constitutional example of the device, the 'image signal acquirer', the above-mentioned constitutional requirement, is implemented by the 'CCD' (0502) in Fig. 5. Then, the 'driving device' (0508) as 'focus lens moving unit' moves or intermittently moves the focus lens, and the CCD acquires an image signal. Subsequently, the image signal is correlated with the focus lens position and is stored in the 'memory' (not indicated) as 'storage' as a position-dependent image signal. Then, from the position-dependent image signal, contrast data is computed by processes in the 'extraction circuit for frequency' (0503), in the 'Fourier-transformation circuit' (0504), in the 'band-pass filter' (0505), and in the 'computation circuit for integration value of a range' (0506). Then, the 'determination circuit for a lens position' (0507) as the 'determinator for an imaging lens position' determines an imaging focus lens position based on the contrast data, and the 'driving device' moves the focus lens to the determined focus lens position, thereby focusing.

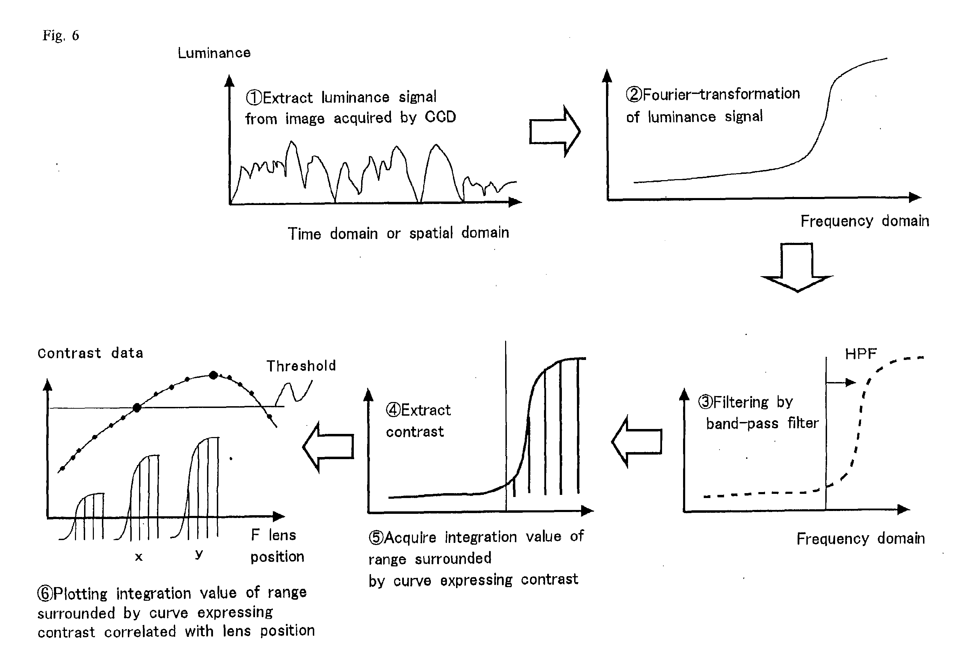

Fig. 6 is a diagram expressing an acquisition of contrast data (determination value of in-focus) necessary for determining an imaging lens position in the constitutional example. Fig. 6 shows a method for Fourier-transforming and processing a luminance signal of a picture element as a frequency component. As shown in Fig. 6, a luminance signal as an image signal is acquired from the light of an image, which passes through a focus lens, by the 'CCD' (0502). Next, the luminance signal is extracted by the 'extraction circuit for frequency' (0503) from the image acquired by the CCD. (Indicated as (1) in Fig. 6. Hereinafter the same is applied.) Subsequently, the frequency component of the luminance signal is Fourier-transformed by the 'Fourier-transformation circuit' (0504) (2). The Fourier-transformed luminance signal is filtered by the 'band-pass filter' (0505) (3). The high-frequency components of the frequency component, therefore, a portion of contrast is extracted (4). The integration value of the range (shaded portion) as contrast data, which has been extracted, is acquired by the 'computation circuit for integration value of a range' (0506) (5). The integration value correlated with a lens position is plotted as the contrast data (6).

Thus, by using the computed contrast data, the imaging lens position is determined. According to the preset invention, an image signal is acquired by a focus lens moving or moving intermittently, thereby enabling a faster acquisition. Conclusively, a determination process of an imaging lens position is performed faster than that of the conventional method.

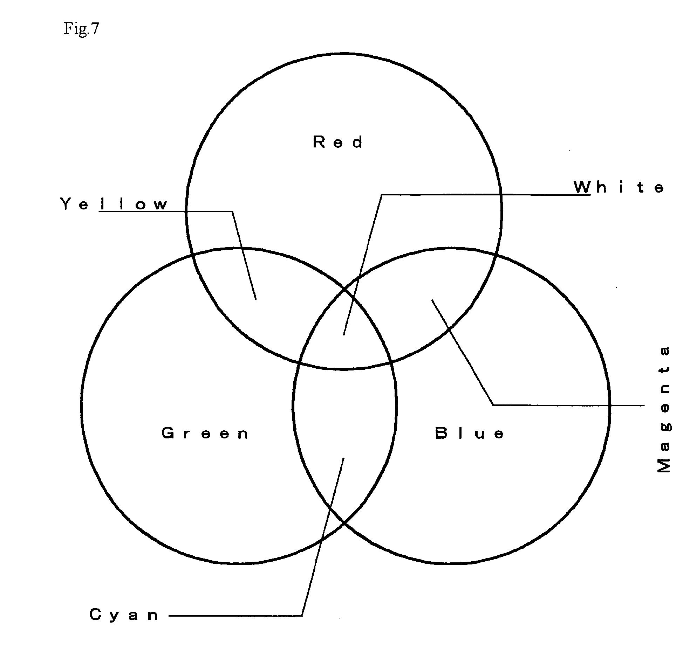

Note that, in the above constitutional example of the device, a luminance signal is used as an image signal because a luminance signal is considered as a signal in which a peak of said integration value appears prominently. Of course, the above-mentioned color signal, expressed by an RGB or a CMYG signal, may be used as an image signal other than the luminance signal. For example, a color signal RGB may be converted to a luminance signal Y by a conversion equation such as 'Y=0.299R+0.587G+0.114B+16'. Hence, a method for acquiring contrast information by computing a value of a luminance signal from the RGB signal by using the above conversion equation may be cited. In addition, Fig. 7 is a diagram showing a CMYG signal. As shown in this Fig. 7, Cyan is Blue-Green, Magenta is Red-Blue, and Yellow is Green-red. Reducing respective color from a combination of four colors, this CMY and Green, so that RGB is acquired. For example, Red is acquired by the formulas: Red=Yellow-Green, and Red=Magenta-Blue. Since a complementary CCD for acquiring this CMYG signal and imaging is sensitive to light, there are many cases of using it for a digital camera, in which sensitivity is important. Also in the present invention, it is assumed that this CMYG signal is acquired as an image signal.

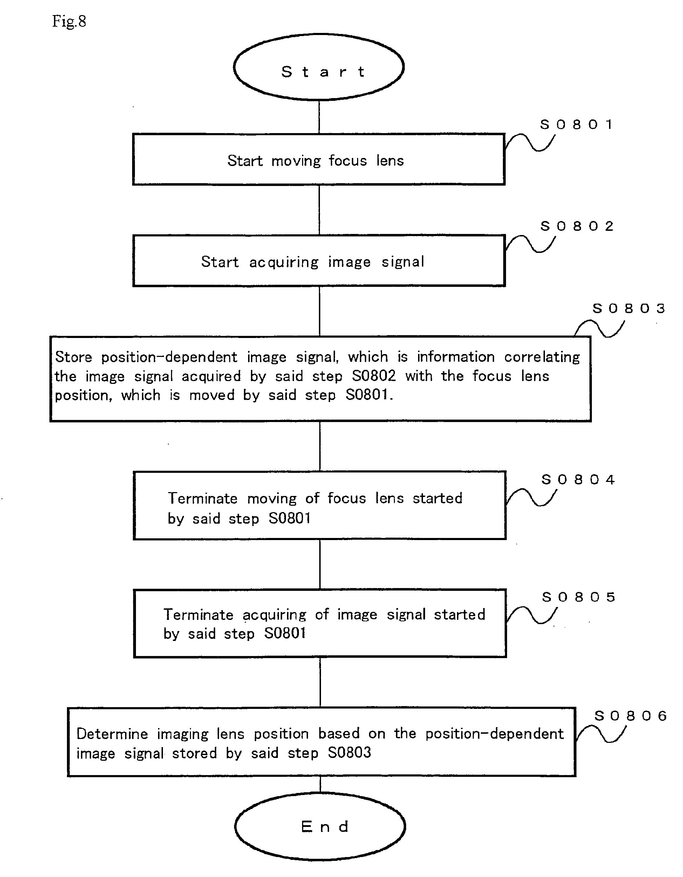

Fig. 8 is a flow chart exemplifying a processing flow of the first embodiment. Note that, the processing flow described hereinafter may be embodied as a method, a program for causing a computer to execute, or a readable recording medium on which the program is recorded. As shown in Fig. 8, first, a movement of focus lens is started (step S0801). Next, acquisition of an image signal is started (step S0802). Subsequently, storage of a position-dependent image signal, which is information correlating the image signal acquired by said step S0802 with the focus lens position, which is moved by said step S0801, is started (0803). Next, the movement of focus lens started by said step S0801 is terminated (step S0804). Further, the acquisition of the image signal started by said step S0801 is terminated (step S0805). Finally, an imaging lens position.based on the position-dependent image signal stored by said step S0803 is determined (step S0806).

As described above, according to the first embodiment, a faster determination of a focus lens position, in which a subject is focused on, becomes possible, thereby enhancing the possibility of taking advantage of a chance of shooting.

### (Second embodiment)

In the second embodiment, a device for controlling an imaging lens position relating to the device for controlling an imaging lens position of the first embodiment, specifically, a scanning method upon acquiring the image signal will be described. Concretely, an image signal acquirer of the second embodiment comprises a vertical scanning means, which acquires an image signal by vertically scanning an image sensor arranged in a matrix, or a horizontal scanning means, which acquires an image signal by horizontally scanning an image sensor arranged in a matrix.

The basic constitution of the second embodiment is the same as that of the device for controlling an imaging lens position described in the first embodiment, so that the description thereof will be omitted. It is characterized in that the image signal acquirer comprises the 'vertical scanning means' or the 'horizontal scanning means'.

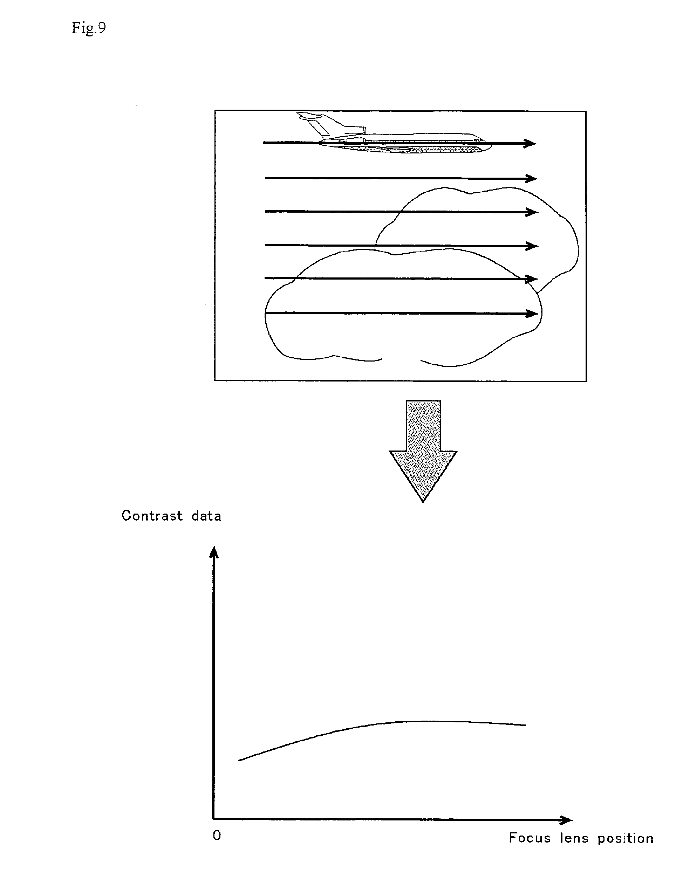

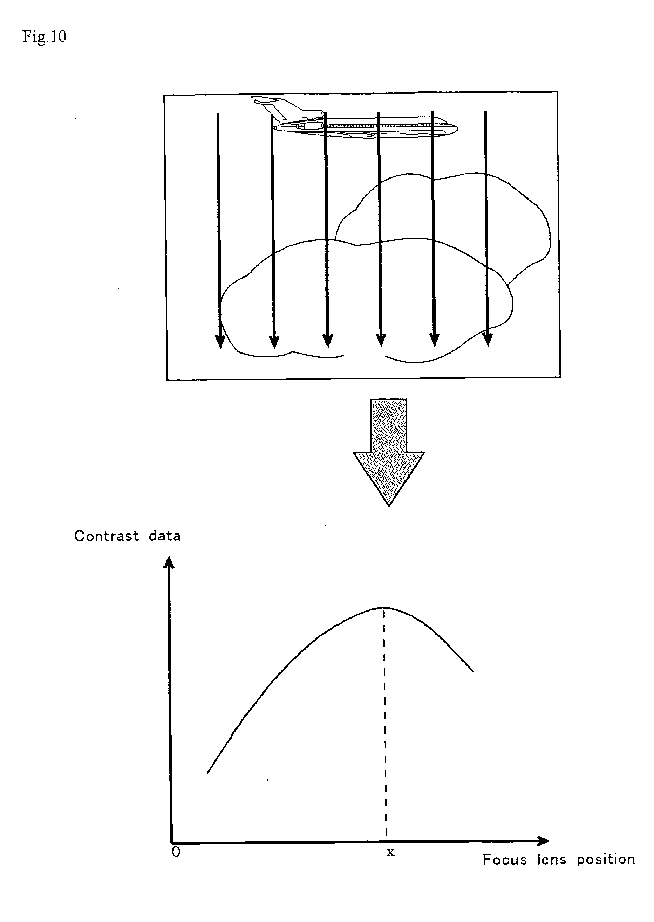

Fig. 9 is a diagram showing a scanning method of the second embodiment. As shown in Fig. 9, for example, in the case that 'an airplane appears in the upper portion of the blue sky', it is possible that a peak of contrast data cannot be detected well by the horizontal scanning as indicated in the graph. The reason is that, in the second embodiment, in cases where a subject having strong edge components (e.g. an airplane) exists around the starting position of scanning, therefore, the starting position of moving a focus lens, and the subject is not yet in focus, it is possible that strong contrast data is not acquired. Further, since there are few edge components in neither the sky nor the cloud, which are both scanned later, it is also possible that strong contrast data is not acquired. Subsequently, in the second embodiment, as shown in Fig. 10, a vertical scanning means, which performs vertical scanning on an image sensor arranged in a matrix, is comprised, thereby enabling a computation of contrast data having a strong peak even in the above case.

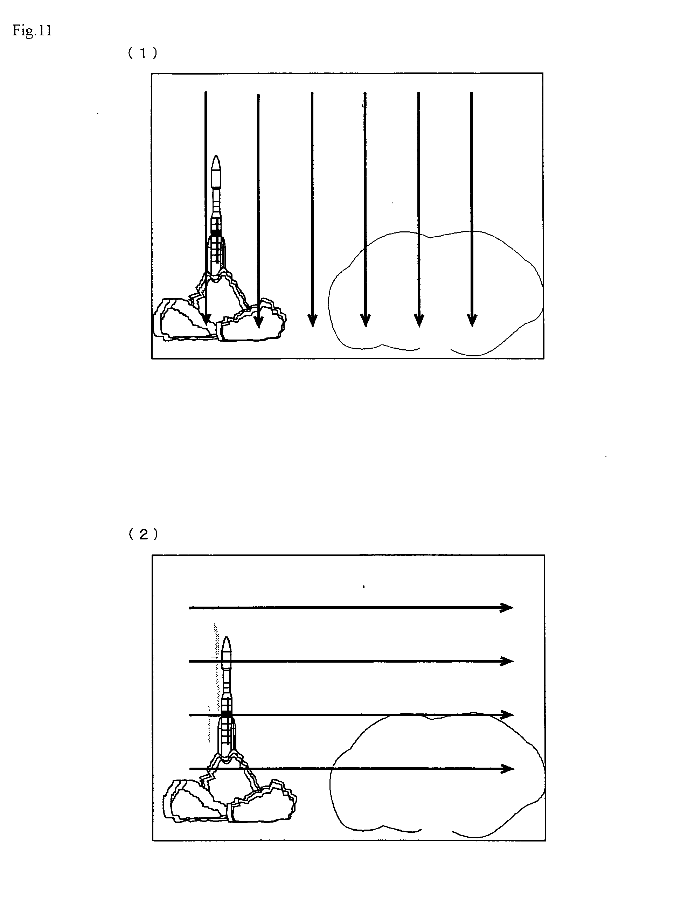

Fig. 11 is a diagram showing the other scan method of the second embodiment. As shown in Fig. 11(1), for example, in the case that 'a rocket appears in the left side of the blue sky', contrary to the above example, if a vertical scanning is performed, it is possible that a peak of contrast data cannot be detected well. Subsequently, in the second embodiment, as shown in Fig. 11(2), a horizontal scanning means, which performs horizontal scanning on an image sensor arranged in a matrix, is comprised, thereby enabling a computation of contrast data having a strong peak even in the above case.

Thus, the device for controlling an imaging lens position described in the first embodiment comprises a vertical scanning means or a horizontal scanning means, so that it becomes possible to focus on a subject corresponding to various situations.

In addition, the device for controlling an imaging lens position of the second embodiment may comprise both a vertical scanning means and a horizontal scanning means, and may further comprise a switching means for scanning a direction, which switches said vertical scanning means and said horizontal scanning means. The 'switching means for scanning direction' may be implemented by a device operated by a photographer, for example, by pressing a button. Further, in cases where the peak of contrast cannot be detected well (e.g. in case where the absolute value for a change of said slope from positive to negative is less than a predetermined value), the switching means for scanning direction may be implemented by a device, which performs switching automatically. Furthermore, after a computation of a result by a vertical scanning means, a horizontal scanning means may be executed, so that an imaging lens position may be determined by the contrast data of both vertical and horizontal scanning means.

This makes it possible to focus on a subject corresponding to more varied situations.

## Claims

1. A device for controlling an imaging lens position, comprising:
an image signal acquirer, which acquires an image signal;
a focus lens moving unit, which moves a focus lens during an acquisition time period, in which said image signal acquirer acquires the image signal;
a storage, which stores a position-dependent image signal, which is information correlating the image signal acquired by said image signal acquirer with a focus lens position, which is moved by said focus lens moving unit;
a determinator for an imaging lens position, which determines an imaging lens position, which is a focus lens position for imaging, based on the position-dependent image signal stored by said storage.

2. The device for controlling an imaging lens position according to Claim 1, wherein said acquisition time period is a time period for acquiring an image signal of a frame.

3. The device for controlling an imaging lens position according to Claim 1 or 2, wherein said focus lens moves intermittently.

4. The device for controlling an imaging lens position according to Claim 3, wherein said position-dependent image signal is an image signal acquired during a non-moving state of said focus lens moving intermittently.

5. The device for controlling an imaging lens position according to any one of Claims 1 to 4, wherein said image signal acquirer comprises a vertical scanning means, which acquires an image signal by vertically scanning an image sensor arranged in a matrix.

6. The device for controlling an imaging lens position according to any one of Claims 1 to 4, wherein said image signal acquirer comprises a horizontal scanning means, which acquires an image signal by horizontally scanning an image sensor arranged in a matrix.

7. The device for controlling an imaging lens position according to Claim 5 or 6, wherein said image signal acquirer comprises a switching means for scanning direction, which switches said vertical scanning means and said horizontal scanning means.

8. The device for controlling an imaging lens position according to any one of Claims 1 to 7, wherein said image signal is a luminance signal.

9. The device for controlling an imaging lens position according to any one of Claims 1 to 8, wherein said image signal is an RGB signal.

10. The device for controlling an imaging lens position according to any one of Claims 1 to 8, wherein said image signal is a CMYG signal.
